(19) Europäisches Patentamt
European Patent Office
Office européen des brevets

(11) EP 3 919 536 A1

# (12) EUROPEAN PATENT APPLICATION

(43) Date of publication:
**08.12.2021 Bulletin 2021/49**

(21) Application number: **20185211.8**

(22) Date of filing: **10.07.2020**

(51) Int Cl.:
***C08G 18/18*** *(2006.01)* ***C08G 18/20*** *(2006.01)*
***C08G 18/48*** *(2006.01)* ***C08G 18/76*** *(2006.01)*
***C08J 9/00*** *(2006.01)* ***C08J 9/14*** *(2006.01)*
*C08G 101/00* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2020 CN 202010509840**

(71) Applicant: **Covestro Deutschland AG**
**51373 Leverkusen (DE)**

(72) Inventors:
- **Wenping, Wei**
  **Shanghai (CN)**
- **Liqiang, Li**
  **Shanghai (CN)**
- **Jianwu, Gao**
  **District of Shanghai (CN)**

(74) Representative: **Levpat**
**c/o Covestro AG**
**Gebäude 4825**
**51365 Leverkusen (DE)**

## (54) METHOD FOR PREPARING A RIGID POLYURETHANE FOAM

(57) The present invention relates to a method for preparing a rigid polyurethane foam using a noncontinuous production process, the rigid polyurethane foam prepared therefrom, and use thereof.

Fig. 1

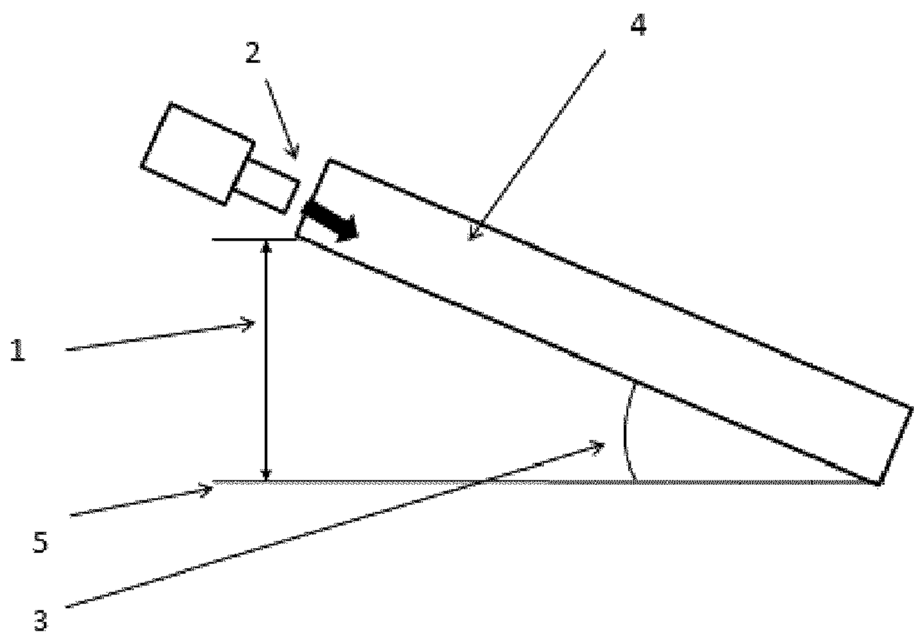




Printed by Jouve, 75001 PARIS (FR)

## Description

### Technical field

The present invention relates to a method for preparing a rigid polyurethane foam using a non-continuous production process, the rigid polyurethane foam prepared therefrom, and use thereof.

### Prior art

Polyurethane rigid foam boards have good properties such as lightweight and thermal insulation. They are widely used in cold boxes, refrigerated trucks, cold stores and buildings. In the production of polyurethane sandwich boards, non-continuous preparation of boards has advantages of flexible and simple process, etc., and is very important in the market.

In cold chain transportation, the thermal insulation property of transportation equipments has always been the focus of attention. How to improve the thermal insulation property of products is also an important indicator pursued by various manufacturers.

Existing polyurethane composite materials prepared by a non-continuous process are prepared by placing a prefabricated shell in a mold, then injecting a polyurethane resin into the mold, closing the mold, foaming the polyurethane resin to form a polyurethane foam and then demolding to give a polyurethane composite. The polyurethane resin is usually formed by mixing an isocyanate component and a polyol component. How to produce a rigid polyurethane foam with better thermal insulation property under energy-saving, economical and environmentally friendly preconditions has always been a difficult problem to be solved in the industry.

CN1239914A discloses a process for preparing a soft foam product by injecting raw materials for reaction with different densities in two steps while keeping the mold angle at 40°, but it is silent about the influence of larger foaming angles on the system. Meanwhile, it is a process for preparing a soft foam, and is silent about issues, such as thermal insulation, bubbles, etc., in the foam.

CN102529008A provides a method for preparing a block foam. Firstly, the end of the mold near the injection port is raised to form a certain angle, then, the mold is cleaned and assembled, and after that an injection tube and the injection port form a second preset angle; raw materials for foam reaction are injected, and at last, a product is formed. The process can improve the product quality, but it is silent about the specific value of each angle and the improvement of the product quality. In addition, the injection port of the process is set on the highest position of the mold.

Therefore, despite the above disclosures, the industry still has an urgent need for a method for preparing a rigid polyurethane foam with more optimized thermal insulation property of foam.

### Summary of the invention

One aspect of the present invention is to provide a method for preparing a rigid polyurethane foam using a non-continuous production process, comprising
injecting a polyurethane reaction system comprising the following components into a mold for preparing the rigid polyurethane foam:

component A, a polyisocyanate;

component B, comprising

a polyether polyol having a functionality of 2.0 to 8.0, a hydroxyl number of 50 to 550 mg KOH/g, preferably 90 to 450 mg KOH/g (measured according to ISO14900-2017);

wherein, the angle of the mold relative to the horizontal plane during foaming of the polyurethane reaction system is ≥ 5 degrees, preferably ≥ 7 degrees, more preferably ≥ 10 degrees, particularly preferably ≥ 30 degrees, more particularly preferably ≥ 45 degrees; and

the mold has at least one sprue gate located below 1/2, preferably below 1/3, more preferably below 1/4, of the height direction of the mold.

Preferably, the component B further comprises at least one of the following components:

B1) a polyether polyol having a functionality ≥ 4, a hydroxyl number < 400 mg KOH/g (measured according to

ISO14900-2017), in an amount of 5 to 45 pbw, preferably 7 to 25 pbw, based on 100 pbw of component B;

B2) a polyether polyol having a functionality > 4, a hydroxyl number > 400 mg KOH/g (measured according to ISO14900-2017), in an amount of 20 to 70 pbw, preferably 30 to 65 pbw, based on 100 pbw of component B;

B3) a polyether polyol started with an aromatic amine, having a functionality of 3.5 to 4.2, a hydroxyl number < 400 mg KOH/g (measured according to ISO14900-2017), a viscosity < 30000 mPa·s at 25°C (measured according to ISO3219-1993), in an amount of 5 to 35 pbw, preferably 10 to 20 pbw, based on 100 pbw of component B;

B4) a polyether polyol having a functionality ≤ 3, a hydroxyl number < 400 mg KOH/g (measured according to ISO14900-2017), in an amount of 0 to 15 pbw, preferably 3 to 10 pbw, based on 100 pbw of component B; and

B5) at least one flame retardant, in an amount of 5 to 25 pbw, preferably 10 to 20 pbw, based on 100 pbw of component B.

Preferably, a non-halogen flame retardant in the flame retardant is in an amount of 5 to 40 wt%, preferably 10 to 30 wt%, based on the total weight of the flame retardant as 100 wt%.

Preferably, the polyurethane reaction system further comprises component C, at least one foaming agent, in an amount of 2 to 30 wt%, preferably 5 to 25 wt%, based on the total weight of component B.

Preferably, the foaming agent is selected from water, monofluorodichloroethane, cyclopentane, pentafluorobutane, pentafluoropropane, 1-chloro-3,3,3-trifluoropropene, 1-chloro-2,3,3,3-tetrafluoropropene, hexafluorobutene or a combination thereof.

Preferably, water in the foaming agent is in an amount of 0.5 to 4.0 wt%, preferably 1.0 to 2.5 wt%, based on the total weight of component B.

Preferably, the thermal conductivity at 25°C of the rigid polyurethane foam prepared with the angle of the mold relative to the horizontal plane during foaming of the polyurethane reaction system ≥ 5 degrees, preferably ≥ 7 degrees, more preferably ≥ 10 degrees, particularly preferably ≥ 30 degrees, more particularly preferably ≥ 45 degrees, decreases ≥ 1%, preferably ≥ 2%, more preferably ≥ 3%, particularly preferably ≥ 5% (measured according to ASTM C177-2010), as compared with that prepared with the angle of the mold relative to the horizontal plane during foaming of the polyurethane reaction system as 0 degree.

Preferably, the polyurethane reaction system further comprises a foam stabilizer, in an amount of 1 to 5 pbw, preferably 1.5 to 3 pbw, based on 100 pbw of component B.

Preferably, the polyurethane reaction system further comprises a catalyst including at least one of a foaming catalyst, a gel catalyst and a trimerization catalyst.

Preferably, the foaming catalyst is selected from one of pentamethyldiethylenetriamine, bis-(dimethylaminoethyl)ether, N,N,N',N"-tetramethylethylenediamine, N,N,N',N"-tetramethylbutanediamine and tetramethylhexanediamine, or a mixture thereof with any ratios; the gel catalyst is selected from one of dimethylcyclohexylamine, dimethylbenzylamine, or a mixture thereof with any ratios; the trimerization catalyst is selected from one of a methyl ammonium salt, an ethyl ammonium salt, an octyl ammonium salt or a hexahydrotriazine and an organometallic base, or a mixture thereof with any ratios.

Through repeated experiments, we unexpectedly found that the method for preparing a rigid polyurethane foam of the present invention, which comprises an improved process, e.g., with the angle of the mold relative to the horizontal plane during foaming of the polyurethane reaction system (≥ 5 degrees, preferably ≥ 7 degrees, more preferably ≥ 10 degrees, particularly preferably ≥ 30 degrees, more particularly preferably ≥ 45 degrees), the specific position of the sprue gate (the sprue gate located below 1/2, preferably below 1/3, more preferably below 1/4, of the height direction of the mold), and with the appropriate polyurethane reaction system, improves the thermal insulation of the rigid polyurethane foam simply and efficiently, while keeping other physical properties well.

If the angle of the mold during foaming is too low, the raw materials of the polyurethane reaction system injected will gather near the sprue, which is disadvantageous to the pre-distribution of the raw materials for the foaming reaction in the mold, resulting in quality problems, such as poor density distribution of the foam, and appearance of bubbles or poor density distribution at the end of the foam flow. Meanwhile, the flow of this portion of raw materials inside the mold before starting will decrease the thermal insulation property of the foam. Therefore, the method for preparing a rigid polyurethane foam of the present invention, which sets the sprue gate below 1/2, preferably below 1/3, more preferably below 1/4, of the height of the mold, can improve the pre-distribution of raw materials for reaction in the mold as well as the thermal insulation property of the foam, thus improving the property of the entire polyurethane product.

In the current non-continuous process, the sprue is often set at the highest position of the mold, and A and B (comprising a pre-mixed physical foaming agent) are mixed via the head of a foaming gun and injected into the mold cavity. In such a process, when the raw materials for reaction are injected into the cavity from the highest position of the

mold, a portion of the raw materials will be attached to the top of the mold, and most of the raw materials will be injected into the bottom of the mold. When foaming of the mixture starts, these two portions of the raw materials will meet and affect the thermal insulation property of the foam. If the sprue is changed from the top to the middle of the mold, the raw materials attached to the top of the mold during injection will be reduced. When the injection position is set at the bottom of the mold, all of the raw materials for reaction will be injected at the bottom of the mold. When foaming of the mixture starts, the thermal insulation property and other physical properties of the foam will be better guaranteed without the influence of multiple streams of raw materials.

Another aspect of the present invention is to provide a rigid polyurethane foam, which is prepared by the method for preparing a rigid polyurethane foam of the present invention.

Preferably, the rigid polyurethane foam has a core density of 30 to 80 kg/$m^3$, preferably 35 to 65 kg/$m^3$ (measured according to ISO845-2006).

Preferably, the thermal conductivity at 25°C of the rigid polyurethane foam is ≤ 23.80 mW/m*K, preferably ≤ 23.70 mW/m*K, more preferably ≤ 23.60 mW/m*K (measured according to ASTM C177-2010).

Still another aspect of the present invention is to provide a polyurethane composite board, comprising the rigid polyurethane foam of the present invention.

Preferably, the two surface layers of the composite board has a material selected from one or more of iron, aluminum, FRP, PS and ABS.

Yet another aspect of the present invention is to provide a method for preparing a polyurethane composite board, comprising the following steps:

fixing two surface layers; and

injecting between the two surface layers the polyurethane reaction system which is reacted and foamed to form the polyurethane composite board.

Preferably, the two surface layers are fixed via a mold which comprises an upper cover and a lower cover, and the two surface layers are fixed respectively on the inner surface of the upper cover and the inner surface of the lower cover.

Yet another aspect of the present invention is to provide a thermal insulation equipment comprising the rigid polyurethane foam of the present invention.

Preferably, the thermal insulation equipment is selected from a refrigerator, a freezer, a cold box, a refrigerated truck, a water heater, an insulation barrel, a heat insulation box and a thermal insulation box.

**Brief description of the drawings**

Fig. 1 represents a plan of the mold in the method of the present invention which has an angle of 30 degrees relative to the horizontal plane, wherein, 4 represents the mold, 1 represents the height of the mold, 2 represents the sprue gate, 3 represents the angle of the mold, and 5 represents the horizontal plane.

Fig. 2 represents a plan of the mold in the method of the present invention which has an angle of 60 degrees relative to the horizontal plane, wherein, 4 represents the mold, 1 represents the height of the mold, 2 represents the sprue gate, 3 represents the angle of the mold, and 5 represents the horizontal plane.

Fig. 3 represents a three-dimensional figure of the mold in the method of the present invention which has an angle of 30 degrees relative to the horizontal plane, wherein, 4 represents the mold, 1 represents the height of the mold, 2 represents the sprue gate, and 3 represents the angle of the mold.

**Embodiments**

The following terms used in the present invention have the following definitions or explanations.

Bonding strength refers to the strength of a bonded part when a load/force is applied to break it;

Thermal conductivity refers to the amount of heat transferred per square meter of a material per unit thickness per unit temperature difference and time under stable heat transfer conditions, measured according to ASTM C177-2010;

Core density refers to the density of the center of a foam tested in the case of overfilling in the mold used in the production of polyurethane composite boards, namely the density of the molded foam core;

Pbw refers to parts by weight of components of the polyurethane reaction system;

Functionality refers to the value determined according to the industry formula: functionality = hydroxyl number * molecular weight / 56100, wherein the molecular weight is determined by GPC high performance liquid chromatography;

Isocyanate index refers to the value calculated by the following formula

$$\text{Isocyanate index (\%)} = \frac{\text{the mole number of isocyanate groups (NCO groups) in component A}}{\text{the mole number of isocyanate group reactive groups in component B}} \times 100\%$$

### Components of the polyurethane foam reaction system

#### A) Polyisocyanate

Any organic polyisocyanate can be used to prepare the rigid polyurethane foams of the present invention, including aromatic, aliphatic and alicyclic polyisocyanates, and combinations thereof. The polyisocyanates can be represented by the general formula $R(NCO)_n$, wherein R represents an aliphatic hydrocarbon group having 2 to 18 carbon atoms, an aromatic hydrocarbon group having 6 to 15 carbon atoms, or an araliphatic hydrocarbon group having 8 to 15 carbon atoms, and n = 2 to 4.

Useful polyisocyanates include, but are not limited to, vinyl diisocyanate, tetramethylene 1,4-diisocyanate, hexane diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrodiphenylmethane-2,4-diisocyanate, perhydrodiphenylmethane-4,4-diisocyanate, phenylene-1,3-diisocyanate, phenylene-1,4-diisocyanate, stilbene-1,4-diisocyanate, 3,3-dimethyl-4,4-diphenyldiisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanates and/or their homologues having more rings, polyphenyl polymethylene polyisocyanate (poly-MDI), naphthylene-1,5-diisocyanate (NDI), their isomers, any mixture of them and their isomers.

Useful polyisocyanates also include isocyanates modified by carbodiimide, allophanates, preferably, but not limited to, diphenylmethane diisocyanates, diphenylmethane diisocyanates modified by carbodiimide, their isomers, mixtures of them and their isomers.

The polyisocyanates, when used in the present invention, include isocyanate dimers, trimers, tetramers, or combinations thereof.

In a preferred embodiment of the present invention, the polyisocyanate component is selected from poly-MDI.

The NCO content of the organic polyisocyanate of the present invention is 20 to 33 wt%, preferably 25 to 32 wt%, particularly preferably 30 to 32 wt%. The NCO content is measured according to GB/T 12009.4-2016.

The organic polyisocyanates can also be used in the form of polyisocyanate prepolymers. These polyisocyanate prepolymers can be obtained by reacting an excess of the above organic polyisocyanate with a compound having at least two isocyanate-reactive groups at a temperature of, e.g., 30 to 100°C, preferably about 80°C. The NCO content of the polyisocyanate prepolymer of the present invention is 20 to 33 wt%, preferably 25 to 32 wt%. The NCO content is measured according to GB/T 12009.4-2016.

#### B) Polyol

The polyol of the present invention can include polyether polyols, polyester polyols, polycarbonate polyols, and/or mixtures thereof.

The polyol of the present invention is preferably one or more polyether polyols, wherein at least one polyether polyol is a polyol started with an amine. The polyether polyol has a functionality of 2 to 8, preferably 3 to 6, and a hydroxyl number of 50 to 1200, preferably 200 to 800.

The polyether polyol can be prepared by known processes. Usually, they are prepared from ethylene oxide or propylene oxide with ethylene glycol, 1,2-propylene glycol, 1,3-propylene glycol, diethylene glycol, glycerol, trimethylolpropane, pentaerythritol, triethanolamine, toluenediamine, sorbitol, sucrose or any combination thereof as a starter.

In addition, the polyether polyol can also be prepared by reacting at least one alkylene oxide containing an alkylene group of 2 to 4 carbon atoms with a compound containing 2 to 8, preferably but not limited to 3 to 8 active hydrogen atoms or another reactive compound in the presence of a catalyst.

Examples of the catalyst are alkali metal hydroxides such as sodium hydroxide, potassium hydroxide, or alkoxides of alkali metals such as sodium methoxide, sodium ethoxide, potassium ethoxide or potassium isopropoxide.

Useful alkylene oxides include, but are not limited to, tetrahydrofuran, ethylene oxide, 1,2-propylene oxide, 1,2-butylene oxide, 2,3-butylene oxide, styrene oxide, and any mixture thereof.

Useful compounds containing active hydrogen atoms include polyhydroxy compounds, preferably, but not limited to, water, ethylene glycol, 1,2-propylene glycol, 1,3-propylene glycol, diethylene glycol, trimethylolpropane, any mixture thereof, more preferably polyols, especially alcohols with three or more hydroxy groups, such as glycerol, trimethylolpropane, pentaerythritol, sorbitol and sucrose. Useful compounds containing active hydrogen atoms also include, preferably but not limited to, organic dicarboxylic acids such as succinic acid, adipic acid, phthalic acid, and terephthalic acid, or aromatic or aliphatic substituted diamines such as ethylene diamine, diethylene triamine, triethylene tetramine, propylene diamine, butylene diamine, hexamethylene diamine or toluene diamine.

Other useful reactive compounds include ethanolamine, diethanolamine, methylethanolamine, ethylethanolamine, methyldiethanolamine, ethyldiethanolamine, triethanolamine and ammonia. The polyether polyol prepared with an amine as a starter includes the compound obtained from the reaction of amine as a starter with an alkylene oxide compound.

When used in the present invention, the term "alkylene oxide compound" refers generally to a compound having the following general formula (I):

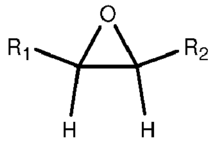

**(I)**

wherein $R_1$ and $R_2$ are independently selected from H, $C_1$-$C_6$ linear and branched alkyl groups, and phenyl group and substituted phenyl groups.

Preferably, $R_1$ and $R_2$ are independently selected from H, methyl, ethyl, propyl and phenyl.

A person skilled in the art knows a method for preparing an "alkylene oxide compound", which can be obtained, for example, by the oxidation reaction of an olefin compound.

Examples of alkylene oxide compounds that can be used in the present invention include, but are not limited to: ethylene oxide, 1,2-propylene oxide, 1,2-butylene oxide, 2,3-butylene oxide, styrene oxide or a mixture thereof, particularly preferably a mixture of ethylene oxide and 1,2-propylene oxide.

When used in the present invention, the term "alkylene oxide compound" also includes oxacycloalkanes, examples of which include, but are not limited to, tetrahydrofuran and oxetane.

When used in the present invention, the term "amine" refers to a compound containing a primary amino group, a secondary amino group, a tertiary amino group, or a combination thereof. Examples of compounds that can be used as the amine of the present invention include, but are not limited to, triethanolamine, ethylene diamine, toluene diamine, diethylene triamine, triethylene tetramine and derivatives thereof, preferably ethylene diamine, toluene diamine, particularly preferably toluene diamine.

Examples of polyether polyols that can be used in the present invention include polyether polyols started with an aromatic amine, preferably propylene oxide-based polyether polyol started with diphenylmethanediamine.

Preferably, the polyether polyols of the present invention include polyether polyols having a functionality of 2.0 to 8.0, a hydroxyl number of 50 to 550 mg KOH/g, preferably 90 to 450 mg KOH/g (measured according to ISO14900-2017).

Preferably, the component B further comprises at least one of the following components:

B1) a polyether polyol having a functionality ≥ 4, a hydroxyl number < 400 mg KOH/g (measured according to ISO14900-2017), in an amount of 5 to 45 pbw, preferably 7 to 25 pbw, based on 100 pbw of component B;

B2) a polyether polyol having a functionality > 4, a hydroxyl number > 400 mg KOH/g (measured according to ISO14900-2017), in an amount of 20 to 70 pbw, preferably 30 to 65 pbw, based on 100 pbw of component B;

B3) a polyether polyol started with an aromatic amine, having a functionality of 3.5 to 4.2, a hydroxyl number < 400 mg KOH/g (measured according to ISO14900-2017), a viscosity < 30000 mPa·s at 25°C (measured according to ISO3219-1993), in an amount of 5 to 35 pbw, preferably 10 to 20 pbw, based on 100 pbw of component B;

B4) a polyether polyol having a functionality ≤ 3, a hydroxyl number < 400 mg KOH/g (measured according to ISO14900-2017), in an amount of 0 to 15 pbw, preferably 3 to 10 pbw, based on 100 pbw of component B.

### Foaming agent

The foaming agent of the present invention can be selected from various physical foaming agents and/or chemical foaming agents. Preferably, the foaming agent is in an amount of 2 to 30 wt%, preferably 5 to 25 wt%, based on the total weight of component B.

Useful foaming agents include water, halogenated hydrocarbons, hydrocarbon compounds or the like. Useful halogenated hydrocarbons are preferably pentafluorobutane, pentafluoropropane, monochlorotrifluoropropene, hexafluorobutene, HCFC-141b (monofluorodichloroethane), HFC-365mfc (pentafluorobutane), HFC-245fa (pentafluoropropane) or any mixture thereof. Useful hydrocarbon compounds include also butane, pentane, cyclopentane (CP), hexane, cyclohexane, heptane, and any mixture thereof. Preferably, the foaming agent is selected from water, monofluorodichloroethane, cyclopentane, pentafluorobutane, pentafluoropropane, 1-chloro-3,3,3-trifluoropropene, 1-chloro-2,3,3,3-tetrafluoropropene, hexafluorobutene or a combination thereof. Preferably, water in the foaming agent is in an amount of 0.5 to 4.0 wt%, preferably 1.0 to 2.5 wt%, based on the total weight of component B as 100 wt%.

### Catalyst

The polyurethane reaction system of the present invention further comprises a catalyst including a foaming catalyst, a gel catalyst and a trimerization catalyst.

Preferably, the foaming catalyst is selected from one of pentamethyldiethylenetriamine, bis-(dimethylaminoethyl)ether, N,N,N',N"-tetramethylethylenediamine, N,N,N',N"-tetramethylbutanediamine and tetramethylhexanediamine, or a mixture thereof with any ratios; the gel catalyst is selected from one of dimethylcyclohexylamine, dimethylbenzylamine, or a mixture thereof with any ratios; the trimerization catalyst is selected from one of a methyl ammonium salt, an ethyl ammonium salt, an octyl ammonium salt or a hexahydrotriazine and an organometallic base, or a mixture thereof with any ratios.

In the embodiments of the present invention, the polyurethane reaction system of the present invention further comprises water, wherein the water is in an amount of 0.1 to 3.5 wt%, preferably 0.5 to 2.8 wt%, particularly preferably 1.5 to 2.6 wt%, based on the total weight of component B except for the foaming agent.

The polyurethane reaction system of the present invention further comprises at least one flame retardant, in an amount of 5 to 25 pbw, preferably 10 to 20 pbw, based on 100 pbw of component B. The flame retardant of the present invention is selected from halogen flame retardants and non-halogen flame retardants.

In the embodiments of the present invention, the polyurethane foam reaction system of the present invention further comprises a surfactant/foam stabilizer, wherein the surfactant is preferably, but not limited to, siloxane derivative of alkylene oxides. The surfactant is in an amount of 1.0 to 5.0 wt%, preferably 0.5 to 4.0 wt%, particularly preferably 1.5 to 3.0 wt%, based on the total weight of component B as 100 wt%.

Through experiments, we unexpectedly found that the method for preparing a rigid polyurethane foam of the present invention not only decreases the thermal conductivity of the rigid polyurethane foam successfully, but also enhances other physical properties. Specifically, the thermal conductivity at 25°C of the rigid polyurethane foam prepared with the angle of the mold relative to the horizontal plane during foaming of the polyurethane reaction system equal to or larger than 0 degree decreases ≥ 1%, preferably ≥ 2%, more preferably ≥ 3%, particularly preferably ≥ 5% (measured according to ASTM C177-2010), as compared with that prepared with the angle of the mold relative to the horizontal plane during foaming of the polyurethane reaction system as 0 degree.

A person skilled in the art knows that the sprue gate for the polyurethane reaction system is usually set at the top of the mold. If the mold is tilted at a certain angle during foaming and the polyurethane reaction system is injected from the top, the liquid of the polyurethane reaction system will always splash onto the inner wall of the mold, causing uneven foaming. We tried to set the sprue gate at a relatively low position of the mold near the horizontal plane, and unexpectedly, solved this problem. Besides, more unexpectedly, when the sprue gate was set below 1/2, preferably below 1/3, more preferably below 1/4, of the height direction of the mold near the horizontal plane, we found that the pre-distribution of raw materials for reaction in the mold was improved, and thereby, the thermal insulation property of the rigid polyurethane foam was improved. On the contrary, if the raw materials for the reaction system are not injected from the lowest part of the mold, but flows from a certain height to the bottom of the mold and then starts filling the mold, it will affect the formation of foam cells during the flow of the raw materials, resulting in deterioration in the thermal insulation property of the foam.

The method of the invention is simple and easy to operate, needless of adding investment to expensive equipment, and is very beneficial to the production of thermal insulation equipments.

### Polyurethane foam

In the embodiments of the present invention, preferably, the rigid polyurethane foam has a core density of 30

to 80 kg/$m^3$, preferably 35 to 65 kg/$m^3$ (measured according to ISO845-2006).

Preferably, the thermal conductivity at 25°C of the rigid polyurethane foam is ≤ 23.80 mW/m*K, preferably ≤ 23.70 mW/m*K, more preferably ≤ 23.60 mW/m*K (measured according to ASTM C177-2010).

The polyurethane foam of the present invention can be used to prepare a polyurethane composite board. The polyurethane composite board of the present invention can consist of two surface layers and a polyurethane foam layer between the two surface layers.

Preferably, the two surface layers of the composite board has a material selected from one or more of iron, aluminum, FRP, PS and ABS.

The method for preparing a polyurethane composite board of the present invention comprises the following steps:

fixing the two surface layers; and

injecting between the two surface layers the polyurethane reaction system which is reacted and foamed to form the polyurethane composite board.

Preferably, the two surface layers are fixed via one mold which comprises an upper cover and a lower cover, and the two surface layers are fixed respectively on the inner surface of the upper cover and the inner surface of the lower cover.

The two surface layers according to the method for preparing a polyurethane composite board of the present invention are preferably fixed via one mold which comprises an upper cover and a lower cover, and the two surface layers are fixed respectively on the inner surface of the upper cover and the inner surface of the lower cover.

The method for preparing a polyurethane composite board of the present invention preferably uses a non-continuous production process. A composite board usually comprises a cavity and a polyurethane foam filled in the cavity, and the cavity material is selected from metal, plastic, composite board, etc. A hollow shell part can be prefabricated, and then the seams of the hollow shell part are sealed while retaining a injection hole and a vent hole. Finally, the hollow shell part is placed in a foaming mold, and the polyurethane composition is injected into the cavity of the hollow shell part via the injection hole of the mold and the hollow shell part. After the foaming reaction of the polyurethane composition is completed, the foamed article is taken out from the mold to give the polyurethane composite.

In some embodiments of the present invention, the cavity has a plate shape, a U shape or a hollow cylindrical shape.

The rigid polyurethane foam of the present invention is mainly used for preparing thermal insulation equipment. In some other embodiments of the present invention, the polyurethane composite prepared by a non-continuous process is used in home appliances, such as a refrigerator, a freezer, a cold box, a refrigerated truck, a water heater, an insulation barrel, a heat insulation box and a thermal insulation box, etc.

The thermal insulation equipment of the present invention comprises the above polyurethane foam or polyurethane composite board. The thermal insulation equipment can be a refrigerator, a freezer, a cold box, a refrigerated truck, a water heater, an insulation barrel, a heat insulation box and a thermal insulation box, etc.

## Examples

Description of raw materials:

DC380, a polyether polyol, from Jurong Ningwu New Material Co., Ltd., hydroxyl number 380, viscosity 11250, functionality 5.8;

NJ8268, a polyether polyol, from Jurong Ningwu New Material Co., Ltd., hydroxyl number 310, viscosity 1200, functionality 4.0;

NJ8345, a polyether polyol, from Jurong Ningwu New Material Co., Ltd., hydroxyl number 450, viscosity 17000, functionality 5.2;

DC635C, a polyether polyol, from Jurong Ningwu New Material Co., Ltd., hydroxyl number 500, viscosity 5800, functionality 4.5;

Z450, a polyether polyol, from Covestro Taiwan Co., Ltd, hydroxyl number 345, viscosity 12000, functionality 4.0;

TCPP, a halogen flame retardant, from Jiangsu Yoke Technology Co., Ltd.;

TEP, a non-halogen flame retardant, from Jiangsu Yoke Technology Co., Ltd.;

L6920, a foam stabilizer, from Momentive Performance Materials (China) Inc.;

Cyclopentane, a foaming agent, from Guangzhou Meilong Company;

HFC 245fa and LBA, from Honeywell Company;

Dabco Polycat 41, a polyurethane synthesis catalyst, from Air Products and Chemicals (China) Co., Ltd.;

Dabco Polycat 8, a polyurethane synthesis catalyst, from Air Products and Chemicals (China) Co., Ltd.;

Desomdur® 44v20L, an isocyanate, NCO content 31.5 wt%, from Covestro Polymers (China) Co., Ltd.

Test methods:

Test of the physical properties of the foam: putting a box made of kraft paper in a mold having a certain size, controlling the temperature of the mold at a set value, and then injecting raw materials for foam reaction in a set amount; taking out the foam after it is cured, and placing it in an environment with a temperature of 23°C and a humidity of 50% for 24 hours, after which testing the core density, the compressive strength and the thermal conductivity of the foam.
Test of the compressive strength is in accordance with GB8813.
Test of the thermal conductivity is in accordance with ASTM C177-2010.

Preparation of rigid polyurethane foams

The components of B according to Table 1 are stirred uniformly for later use, and the parts of cyclopentane shown in Table 2 are added thereto and stirred uniformly. The temperature of the prepared raw materials (components A and B) is controlled at 20°C in the thermostat for later use. The mold angles are adjusted to the specific angles of the examples or comparative examples as in Table 2 and Table 3, and then, A and B (comprising a foaming agent) are stirred (with a stirring time of 10 seconds and a stirring speed of 4000 rpm) uniformly according to the proportions according to Table 2 or Table 3, and then poured into the mold. When the specified demolding time is reached, the mold can be opened and the foamed board can be taken out for the next process.

Table 1- Proportions of the components of component B in the polyurethane reaction system (unit: pbw; wt% for water)

| Items | Reaction System 1# | Reaction System 2# |
|---|---|---|
| NJ8345 | 40 | |
| NJ380 | | 45 |
| NJ635C | 30 | 30 |
| NJ8268 | 10 | 10 |
| Z450 | 20 | 15 |
| TCPP | 13 | 13 |
| L6920 | 2 | 2 |
| Dabco Polycat 8 | 0.37 | 0.53 |
| DabcoPolycat 41 | 0.65 | 0.65 |
| $H_2O$ | 2.00 wt% | 1.40 wt% |

Influence of foaming angles on the foam properties

Table 2 - Reaction System 1# - Influence of foaming angles on the foam properties

| Polyether polyol, g | 100 |
|---|---|

(continued)

| | | | | | | |
|---|---|---|---|---|---|---|
| Cyclopentane, g | | 12 | | | | |
| "Black material" (isocyanate component), g | | 130 | | | | |
| Temperature of raw materials, °C | | 20 | | | | |
| Stirring speed, rpm | | 4000 | | | | |
| Stirring time, second | | 10 | | | | |
| Filling density, kg/m$^3$ | | 45 | | | | |
| Mold size, mm | | 300*300*100 | | | | |
| Mold temperature, °C | | 40.00 | | | | |
| Demolding time, minute | | 25 | | | | |
| Comp. Ex. and Ex. | | Comp. Ex. 1 | Ex. 1 | Ex. 2 | Ex. 3 | Ex. 4 |
| Foaming angle, °/degree | | 0 | 10 | 30 | 45 | 90 |
| Core density, kg/m$^3$ | | 36.89 | 37.14 | 37.63 | 37.58 | 37.91 |
| Thermal conductivity, mW/m*K, 25°C | | 23.90 | 23.35 | 22.97 | 22.66 | 22.50 |
| Thermal conductivity, mW/m*K, 10°C | | 22.06 | 21.64 | 21.29 | 21.17 | 21.05 |
| Compressive strength | ⊥, Kpa | 197.10 | 195.26 | 198.85 | 198.08 | 202.09 |
| | ⊥, Kpa | 201.59 | 198.27 | 188.96 | 186.44 | 182.92 |
| | //, Kpa | 192.65 | 202.10 | 206.13 | 201.92 | 207.22 |

Table 3 - Reaction System 2# - Influence of foaming angles on the foam properties

| | | | | | | |
|---|---|---|---|---|---|---|
| Polyether polyol, g | | 100 | | | | |
| Cyclopentane, g | | 12 | | | | |
| "Black material" (isocyanate component), g | | 118 | | | | |
| Raw material temperature, °C | | 20 | | | | |
| Stirring speed, rpm | | 4000 | | | | |
| Stirring time, minute | | 10 | | | | |
| Filling density, kg/m$^3$ | | 55 | | | | |
| Mold size, mm | | 300*300*100 | | | | |
| Mold temperature, °C | | 40.00 | | | | |
| Demolding time, minute | | 30 | | | | |
| Comp. Ex. and Ex. | | Comp. Ex. 2 | Ex. 5 | Ex. 6 | Ex. 7 | Ex. 8 |
| Foaming angle, °/degree | | 0 | 10 | 30 | 45 | 90 |
| Core density, kg/m$^3$ | | 47.32 | 47.83 | 47.91 | 47.76 | 47.82 |
| Thermal conductivity, mW/m*K, 25 °C | | 24.15 | 23.61 | 23.19 | 22.86 | 22.75 |
| Thermal conductivity, mW/m*K, 10°C | | 22.31 | 21.90 | 21.51 | 21.37 | 21.30 |
| Compressive strength | ⊥, Kpa | 268.16 | 271.5 | 263.76 | 264.94 | 266.39 |
| | ⊥, Kpa | 296.84 | 249.32 | 244.65 | 250.15 | 248.44 |
| | //, Kpa | 259.52 | 298.54 | 301.26 | 297.38 | 300.21 |

As can be known from the experimental results of Table 2 and Table 3, the rigid polyurethane foam prepared

when the mold has a certain angle, such as 10° or more, relative to the horizontal plane during foaming of the polyurethane reaction system has a significantly decreased thermal conductivity, as compared with that prepared when the angle of the mold relative to the horizontal plane during foaming of the polyurethane reaction system is 0 degree. Specifically, the thermal conductivity at 25°C of the rigid polyurethane foam prepared when the mold has a certain angle relative to the horizontal plane during foaming of the polyurethane reaction system decreases ≥ 1%, preferably ≥ 2%, more preferably ≥ 3%, particularly preferably ≥ 5% (measured according to ASTM C177-2010), as compared with that prepared when the angle of the mold relative to the horizontal plane during foaming of the polyurethane reaction system is 0 degree.

Table 4 - Reaction System 1# - Influence of injection positions on the foam properties

| Foaming angle, 45° | | Ex. 9 | Comp. Ex. 3 | Comp. Ex. 4 |
| --- | --- | --- | --- | --- |
| Injection position | | Mold bottom | ½ Mold height | Mold top |
| Filling dnesity, kg/m$^3$ | | 45.00 | | |
| Mold size, mm | | 500*500*75 | | |
| Mold temperature, °C | | 40.00 | | |
| Demolding time, minute | | 30 | | |
| Core density, kg/m$^3$ | | 37.58 | 37.62 | 37.73 |
| Thermal conductivity, mW/m*K, 25 °C | | 22.66 | 22.79 | 22.82 |
| Thermal conductivity, mW/m*K, 10°C | | 21.17 | 21.38 | 21.41 |
| Compressive strength | ⊥, Kpa | 198.08 | 188.06 | 185.32 |
| | ⊥, Kpa | 186.44 | 185.14 | 188.26 |
| | //, Kpa | 201.92 | 205.52 | 203.73 |

As can be seen from the experimental results of Table 4, injection positions have a certain influence on the foam properties, i.e., when the materials are injected at a position lower than 1/2 height, the thermal conductivity of the foam decreases obviously. If the position of the sprue is changed without changing the foaming angle, the resulting foam will have physical properties not very different but a thermal conductivity obviously different. The thermal conductivity of the foam decreases with the lowering of the sprue in the mold.

Although the present invention has disclosed the above preferred examples, it is not intended to limit the present invention. Any person skilled in the art can make various changes and modifications without departing from the spirit and scope of the present invention. The protection scope of the present invention shall be based on the scope of the claims.

## Claims

**1.** A method for preparing a rigid polyurethane foam using a non-continuous production process, comprising injecting a polyurethane reaction system comprising the following components into a mold for preparing the rigid polyurethane foam:

component A, comprising a polyisocyanate;
component B, comprising a polyether polyol having a functionality of 2.0 to 8.0, a hydroxyl number of 50 to 550 mg KOH/g, preferably 90 to 450 mg KOH/g (measured according to ISO14900-2017);
wherein, the angle of the mold relative to the horizontal plane during foaming of the polyurethane reaction system is ≥ 5 degrees, preferably ≥ 7 degrees, more preferably ≥ 10 degrees, particularly preferably ≥ 30 degrees; and
the mold has at least one sprue gate located below 1/2, preferably below 1/3, more preferably below 1/4, of the height direction of the mold near the horizontal plane.

**2.** The method according to claim 1, **characterized in that** the component B further comprises at least one of the following components:

B1) a polyether polyol having a functionality ≥ 4, a hydroxyl number < 400 mg KOH/g (measured according to ISO14900-2017), in an amount of 5 to 45 pbw, preferably 7 to 25 pbw, based on 100 pbw of component B;

B2) a polyether polyol having a functionality > 4, a hydroxyl number > 400 mg KOH/g (measured according to ISO14900-2017), in an amount of 20 to 70 pbw, preferably 30 to 65 pbw, based on 100 pbw of component B;
B3) a polyether polyol started with an aromatic amine, having a functionality of 3.5 to 4.2, a hydroxyl number < 400 mg KOH/g (measured according to ISO14900-2017), a viscosity < 30000 mPa·s at 25°C (measured according to ISO3219-1993), in an amount of 5 to 35 pbw, preferably 10 to 20 pbw, based on 100 pbw of component B; and
B4) a polyether polyol having a functionality ≤ 3, a hydroxyl number < 400 mg KOH/g (measured according to ISO14900-2017), in an amount of 0 to 15 pbw, preferably 3 to 10 pbw, based on 100 pbw of component B.

3. The method according to claim 1 or 2, **characterized in that** the component B further comprises
B5) at least one flame retardant, in an amount of 5 to 30 pbw, preferably 10 to 20 pbw, based on 100 pbw of component B.

4. The method according to claim 3, **characterized in that** a non-halogen flame retardant in the flame retardant is in an amount of 5 to 40 wt%, preferably 10 to 30 wt%, based on the total weight of the flame retardant as 100 wt%.

5. The method according to claim 1 or 2, **characterized in that** the polyurethane reaction system further comprises component C, at least one foaming agent, in an amount of 2 to 30 wt%, preferably 5 to 25 wt%, based on the total weight of component B as 100 wt%.

6. The method according to claim 5, **characterized in that** water in the foaming agent is in an amount of 0.5 to 4.0 wt%, preferably 1.0 to 2.5 wt%, based on the total weight of component B as 100 wt%.

7. The method according to claim 1 or 2, **characterized in that** the thermal conductivity at 25°C of the rigid polyurethane foam prepared with the angle of the mold relative to the horizontal plane during foaming of the polyurethane reaction system ≥ 5 degrees, preferably ≥ 7 degrees, more preferably ≥ 10 degrees, decreases ≥ 1%, preferably ≥ 2%, more preferably ≥ 3%, particularly preferably ≥ 5% (measured according to ASTM C177-2010), as compared with that prepared with the angle of the mold relative to the horizontal plane during foaming of the polyurethane reaction system as 0 degree.

8. A rigid polyurethane foam, prepared by the method for preparing a rigid polyurethane foam according to any of claims 1 to 7.

9. The rigid polyurethane foam according to claim 8, **characterized in that** the rigid polyurethane foam has a core density of 30 to 80 kg/m$^3$, preferably 35 to 65 kg/m$^3$ (measured according to ISO845- 2006).

10. The rigid polyurethane foam according to claim 8 or 9, **characterized in that** the thermal conductivity at 25°C of the rigid polyurethane foam is ≤ 23.80 mW/m*K, preferably ≤ 23.70 mW/m*K, more preferably ≤ 23.60 mW/m*K (measured according to ASTM C177-2010).

11. A polyurethane composite board, comprising the rigid polyurethane foam according to any of claims 8 to 10.

12. A method for preparing the polyurethane composite board according to claim 11, comprising the following steps:

fixing two surface layers; and
injecting between the two surface layers the polyurethane reaction system which is reacted and foamed to form the polyurethane composite board.

13. The method according to claim 12, wherein the two surface layers are fixed via a mold which comprises an upper cover and a lower cover, and the two surface layers are fixed respectively on the inner surface of the upper cover and the inner surface of the lower cover.

14. A thermal insulation equipment, comprising the rigid polyurethane foam according to any of claims 8 to 10.

15. The thermal insulation equipment according to claim 14, **characterized in that** the thermal insulation equipment is selected from a refrigerator, a freezer, a cold box, a refrigerated truck, a water heater, an insulation barrel, a heat insulation box and a thermal insulation box.

Fig. 1

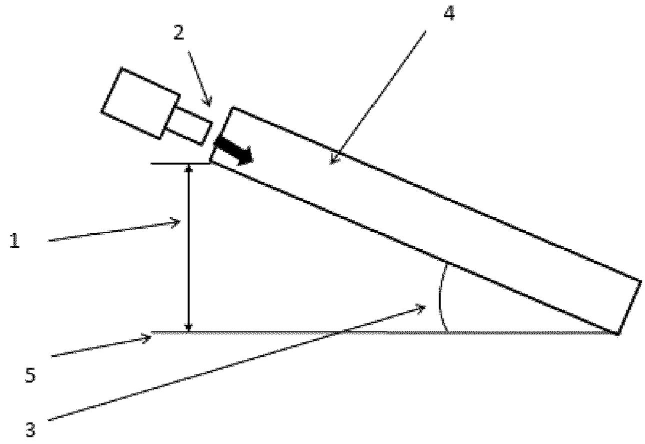


Fig. 2

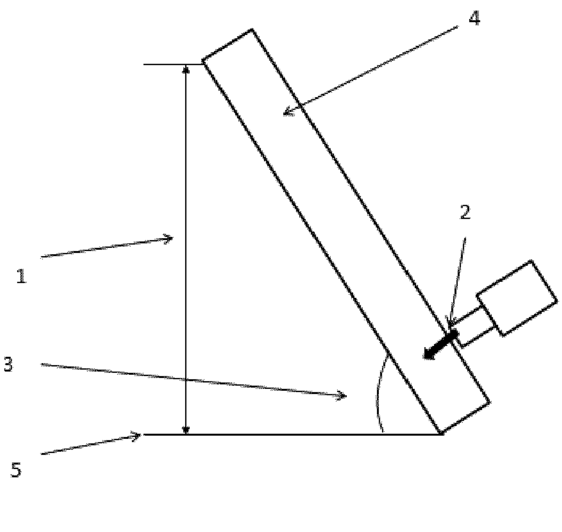

Fig. 3

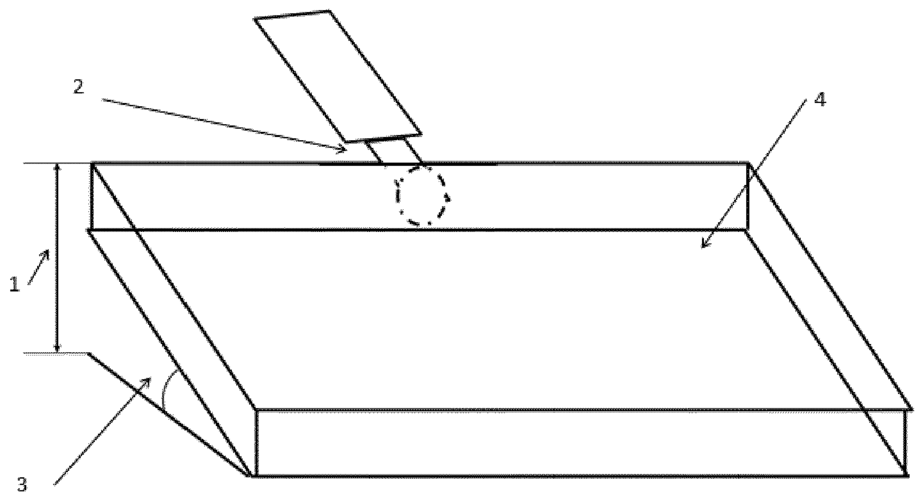

Europäisches Patentamt
European Patent Office
Office européen des brevets

# EUROPEAN SEARCH REPORT

Application Number
EP 20 18 5211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 01/30880 A1 (SHELL INT RESEARCH [NL]; ZARKA PHILIPPE ETIENNE [BE] ET AL.) 3 May 2001 (2001-05-03)<br>* claims 1-6 *<br>* page 1, line 1 - line 3 *<br>* page 2, line 14 - line 21 *<br>* example 1; table 1 *<br>* page 8, line 20 - line 32 *<br>----- | 1-6,8,9, 11-15<br>7,10 | INV.<br>C08G18/18<br>C08G18/20<br>C08G18/48<br>C08G18/76<br>C08J9/00<br>C08J9/14<br><br>ADD.<br>C08G101/00 |
| X<br>A | US 10 144 797 B2 (DOW GLOBAL TECHNOLOGIES LLC [US]) 4 December 2018 (2018-12-04)<br>* claims 1-8 *<br>* column 1, line 6 - line 12 *<br>* column 6, line 33 - line 44 *<br>* column 7, line 60 - column 9, line 7 *<br>* column 10, line 47 - line 67 *<br>* tables 1, 2 *<br>* column 11, line 44 - column 58; table 2 *<br>----- | 8-15<br>1-7 | |
| X<br>A | EP 3 521 331 A1 (COVESTRO DEUTSCHLAND AG [DE]) 7 August 2019 (2019-08-07)<br>* paragraphs [0001], [0007] - paragraph [0021]; claims 1-16 *<br>* page 84; tables 1-3 *<br>* paragraphs [0009], [0079] - paragraph [0081] *<br>----- | 8-15<br>1-7 | TECHNICAL FIELDS SEARCHED (IPC)<br>C08G<br>C08J |
| X<br>A | WO 2019/038289 A1 (COVESTRO DEUTSCHLAND AG [DE]) 28 February 2019 (2019-02-28)<br>* claims 1-10 *<br>* page 1, line 4 - line 5 *<br>* page 2, line 13 - page 5, line 11 *<br>* page 14, line 1 - page 15, line 12; tables 1-3 *<br>* page 16, line 4 - line 10 *<br>----- | 8-15<br>1-7 | |

The present search report has been drawn up for all claims

2

| Place of search | Date of completion of the search | Examiner |
|---|---|---|
| Munich | 7 December 2020 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 18 5211

This annex lists the patent family members relating to the patent documents cited in the above-mentioned European search report. The members are as contained in the European Patent Office EDP file on
The European Patent Office is in no way liable for these particulars which are merely given for the purpose of information.

07-12-2020

| Patent document cited in search report | Publication date | Patent family member(s) | Publication date |
|---|---|---|---|
| WO 0130880 A1 | 03-05-2001 | AU 7287300 A | 08-05-2001 |
| | | WO 0130880 A1 | 03-05-2001 |
| US 10144797 B2 | 04-12-2018 | CN 107531873 A | 02-01-2018 |
| | | EP 3271410 A1 | 24-01-2018 |
| | | JP 6746602 B2 | 26-08-2020 |
| | | JP 2018508637 A | 29-03-2018 |
| | | RU 2017135512 A | 05-04-2019 |
| | | US 2018051121 A1 | 22-02-2018 |
| | | WO 2016148914 A1 | 22-09-2016 |
| EP 3521331 A1 | 07-08-2019 | NONE | |
| WO 2019038289 A1 | 28-02-2019 | EP 3672999 A1 | 01-07-2020 |
| | | WO 2019038289 A1 | 28-02-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1239914 A
- CN 102529008 A